# EUROPEAN PATENT APPLICATION

(11) **EP 1 712 137 A1**
(43) Date of publication of application: **18.10.2006**
(21) Application number: 05102862.9
(22) Date of filing: 12.04.2005
(51) Int. Cl.: A23F 5/02, A23F 5/10

(54) **Coffee product**

(71) Applicant: NESTEC S.A., 1800 Vevey (CH)
(72) Inventor: Leloup, Valérie, Martine, Jeanine, 1350 Orbe (CH); Parchet, Jean-Michel, 1350 Orbe (CH); Liardon, Rémy, 1010 Lausanne (CH)
(74) Representative: Schüller, Cornelis

(57) **Abstract**

A ground coffee product comprises (i) a first portion consisting of unroasted ground coffee, in an amount of from 1 to 90% by weight based on the total weight of the ground coffee composition, and (ii) a second portion consisting of ground coffee which has been roasted to a higher degree of roast than said first portion, in an amount of from 10 to 99% by weight based on the total weight of the ground coffee composition wherein the weight ratio of (i) to (ii) is from 10:90 to 80:20.

## Description

### Field of the Invention

The present invention relates to a coffee product, a method of preparing a coffee product as well as to the use of such a product to provide certain desirable consumer benefits.

### Background of the Invention

Coffee is a complex mixture of many hundreds of compounds. For a long time, it has been known that certain of these compounds are capable of providing benefits to the consumer. For instance, various compounds are capable of providing anti-oxidants to the consumer when ingested, anti-oxidants being known and associated by consumers with health benefits.

Chlorogenic acids in coffee are mainly mono- and di-esters of quinic acid and phenolic groups (e.g. caffeic, ferulic, coumaric, methoxycinnamic) attached to different positions. These chlorogenic acids have been shown to have antioxidative activity *in vitro* (e.g. radical scavenging, LDL oxidation resistance, DNA damage protection) and antimutagenic effect *in vivo* on large intestine, liver and tongue in rats and hamsters. Additionally chlorogenic acids are able to reduce systemic acid secretion in the stomach protecting the gastric mucosa against irritations possibly responsible for heartburn.

Thus it is desirable to maximise the amount of chlorogenic acid available in coffee products.

Conventional coffee process methods, where all of the beans that contribute to an end product are roasted, are well known.

However, it has been found that the roasting process degrades a significant amount of the chlorogenic acid present in unroasted coffee. Nevertheless, to achieve the typical coffee flavour desired by consumers, it has hitherto been necessary to roast the beans to a significant degree.

In fact, it has been found that the natural chlorogenic acid content of green coffee is reduced by approximately 40 to 90% during conventional roasting processes.

Thus, it is highly desirable to provide a coffee product which both retains a much higher level of chlorogenic acids than traditionally associated with roasted coffee but which nevertheless provides an acceptable or even more desirable roasted coffee flavour or at least provides a product with organoleptic properties desired by the consumer and/or which avoids or minimises the provision of a product with undesirable organoleptic properties.

Whilst the mixing of roasted and green coffee beans has been disclosed in WO-A-02/41700, this document fails to disclose or suggest a mixture for soluble coffee products, which both maintains an increased level of chlorogenic acids relative to traditionally roasted coffee and avoids or at least minimises an undesirable organoleptic profile. Moreover, this application teaches that the presence of green coffee in a ground coffee product enhances the flavour whereas it is well known that consumers naturally associate a roasted coffee product, rather than a green coffee product, with an ideal taste and flavour profile.

In view of the foregoing, the present invention seeks to provide one or more of the abovementioned benefits and/or to address one or more of the abovementioned problems.

### Summary of the Invention

Accordingly, the present invention provides a ground coffee product comprising:
(i) a first portion consisting of unroasted ground coffee, in an amount of from 1 to 90% by weight based on the total weight of the ground coffee composition, and
(ii) a second portion consisting of ground coffee which has been roasted to a higher degree of roast than said first portion, in an amount of from 10 to 99% by weight based on the total weight of the ground coffee composition
wherein the weight ratio of (i) to (ii) is from 10:90 to 80:20.

The invention further provides a method of preparing a soluble coffee product comprising the steps of:
(i) providing a ground coffee product comprising (A) a first portion consisting of unroasted ground coffee, in an amount of from 1 to 90% by weight based on the total weight of the ground coffee composition, and (B) a second portion consisting of ground coffee which has been roasted to a higher degree of roast than said first portion, in an amount of from 10 to 99% by weight based on the total weight of the ground coffee composition
(ii) co-extracting portions (A) and (B)
so as to provide a soluble coffee composition having a weight ratio of (A) to (B) of from 10:90 to 80:20.

In a further aspect, the invention provides the use of a coffee product as defined above to provide a product having an increased amount of natural bio-available antioxidants.

In yet another aspect, the invention provides a ground coffee product comprising:
(i) a first portion consisting of ground green coffee, and
(ii) a second portion consisting of ground coffee which has been roasted to a higher degree of roast than said first portion
wherein the weight ratio of (i) to (ii) is from 10:90 to 80:20 and further wherein the level of chlorogenic acid is at least 4g/100g of product.

### Detailed Description of the Invention

The present invention provides a coffee product which depends upon the blending of coffee beans, a portion of which are roasted and portion of which are unroasted, the latter hereinafter being referred to as "green".

In one aspect of the present invention, the coffee product is derived from a mixture of green and roasted coffee beans wherein the weight ratio of the green portion and roasted portion of the coffee product is from 10:90 to 80:20, preferably from 30:70 to 50:50, more preferably from 35:65 to 45:55, most preferably from 37:63 to 42:58.

Surprisingly it has been found that the level of green beans in the mixture can be provided at a very high relative to the level of roasted beans without detrimentally affecting the flavour. Indeed, it has been found that this can provide a desirable flavour profile to the beverage.

Where the ratio is below 10:90, the amount of chlorogenic acid present in the product is found to be insufficient to provide a significant amount of bio-available antioxidants.

Where the ratio is above 60:40, it has been found that the product may be perceived as having undesirable organoleptic profile, mainly due to a weakening of the roasted notes. Of course, it may be possible to compensate the weakening of roasted notes by darkening the roast level of the roasted portion. In this case, the weight ratio of portions (A):(B) is less critical and so can be up to 80:20.

The green coffee portion is desirably a blend of green Arabica and green Robusta in the proportion going from pure Arabica to pure Robusta. It is particularly preferred that the green coffee portion is substantially or wholly derived from Robusta coffee beans. This is because it has been found that Robusta coffee beans provide a greater level of chlorogenic acid per gram of bean than Arabica beans.

The roasted coffee portion is desirably a blend of roasted Arabica and roasted Robusta in the proportion going from pure Arabica to pure Robusta. Preferably the roasted portion is substantially or wholly derived from Arabica coffee beans so as to provide an acceptable organoleptic profile to the product.

Preferably the ground coffee product is used to provide a soluble coffee product.

The soluble coffee mixture may be produced by co-extraction.

Alternatively, the soluble coffee product can be produced by separately providing a first coffee portion comprising portion (A), and a second coffee portion comprising portion (B), (A) and (B) being as defined herein, separately extracting portions (A) and (B); and mixing the extracted portions (A) and (B) together.

In the soluble coffee product, the amount of chlorogenic acid (defined herein as chlorogenic acid in g/100g of product) is preferably at least 4, more preferably at least 5, most preferably at least 6, e.g. at least 7.

### Examples

### Example 1

Soluble coffee products were produced as follows:
Arabica and/or Robusta beans were roasted to a medium roast (CTN 80) and mixed with green Arabica and/or green Robusta beans. The beans were then ground and extracted according to standard methods. The resulting product was then dried to provide a soluble coffee product.

These products were then compared to soluble coffee samples derived wholly from either roasted Arabica and/or Robusta beans.

The products are given in Table 1.

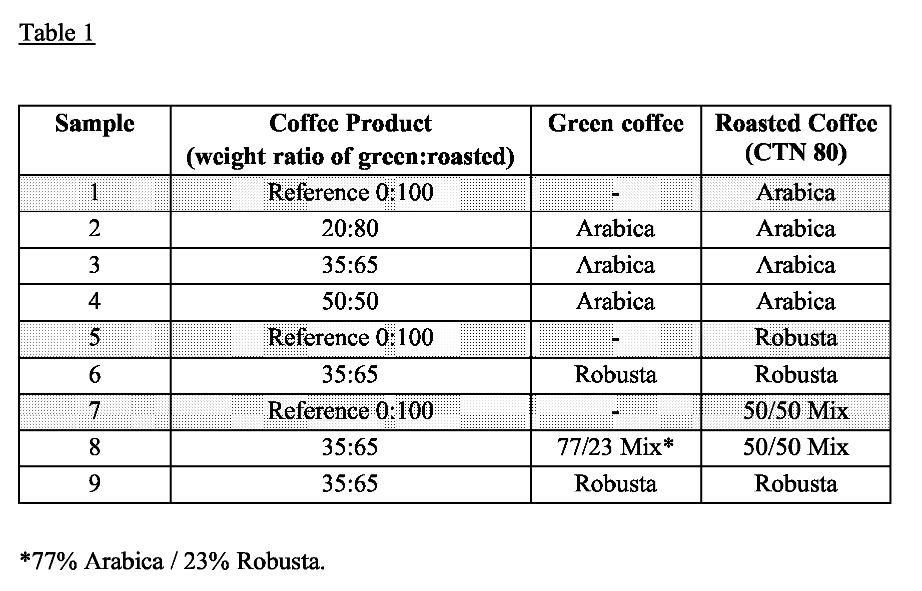

In the examples, the chlorogenic acid isomers have been separated by high pressure liquid chromatography and detected by UV photometry. Antioxidant activity of chlorogenic acid isomers was evaluated in sequence by measuring the radical scavenging ability of the product using stable free radicals (ABTS). The total antioxidant activity was obtained from the summation of antoxidative activity of individual chlorogenic acid isomers. The antioxidant activity is given in "chlorogenic acid equivalents" (g/100g of product).

The results are given in Table 2

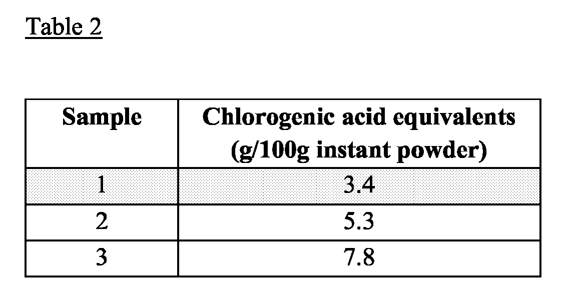

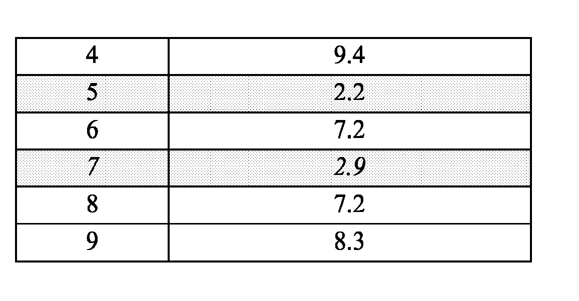

### Example 2

Soluble coffee products were produced as follows:
Arabica and/or Robusta beans were roasted to various levels and mixed with green Arabica and/or green Robusta beans. The beans were then ground and extracted according to standard methods. The resulting product was then dried to provide a soluble coffee product.

These products were then compared to soluble coffee samples derived wholly fro meither roasted Arabica and/or Robusta beans.

The products are given in Table 3.

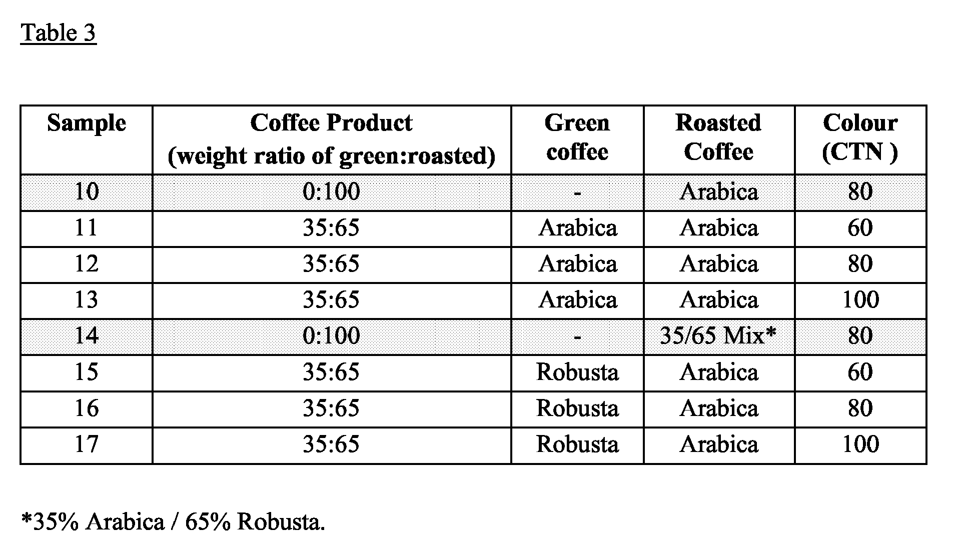

The results are given in Table 4.

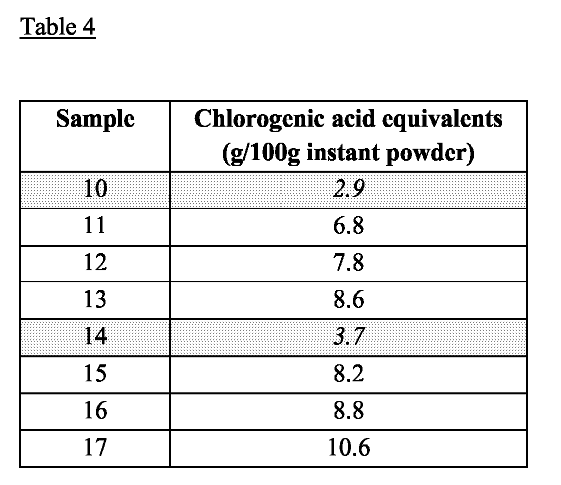

Although the invention has been described with reference to specific embodiments, this description is not meant to be construed in a limited sense. Various modifications of the disclosed embodiments, as well as alternative embodiments of the inventions will become apparent to persons skilled in the art upon the reference to the description of the invention. It is, therefore, contemplated that the appended claims will cover such modifications that fall within the scope of the invention.

## Claims

**1.** A ground coffee product comprising:
(i) a first portion consisting of unroasted ground coffee, in an amount of from 1 to 90% by weight based on the total weight of the ground coffee composition, and
(ii) a second portion consisting of ground coffee which has been roasted to a higher degree of roast than said first portion, in an amount of from 10 to 99% by weight based on the total weight of the ground coffee composition
wherein the weight ratio of (i) to (ii) is from 10:90 to 80:20.

**2.** A ground coffee product in which the weight ratio of (i) to (ii) is from 30:70 to 50:50.

**3.** A ground coffee product in which the weight ratio of (i) to (ii) is from 37:63 to 42:58.

**4.** A ground coffee product as claimed in any one of the preceding claims wherein portion (i) is derived substantially or wholly from Robusta beans.

**5.** A ground coffee product as claimed in any one of the preceding claims wherein portion (ii) is derived substantially or wholly from Arabica beans.

**6.** A coffee product comprising a liquid or solid mixed coffee composition derived from the ground coffee product as claimed in any one of the preceding claims.

**7.** A method of preparing a soluble coffee product comprising the steps of:
(i) providing a ground coffee product as defined in any one of the preceding claims; and
(ii) co-extracting portions (A) and (B)

**8.** A method of preparing a soluble coffee product comprising the steps of:
(i) separately providing a first coffee portion comprising portion (A), and a second coffee portion comprising portion (B), (A) and (B) being as defined in any one of claims 1 to 6;
(ii) separately extracting portions (A) and (B); and
(iii) mixing the extracted portions (A) and (B) together.

**8.** Use of a coffee product as defined in any one of the preceding claims to provide a product having an increased amount of natural bio-available antioxidants.
